# EUROPÄISCHE PATENTSCHRIFT

(11) **EP 3 644 481 B1**
(45) Veröffentlichungstag und Bekanntmachung des Hinweises auf die Patenterteilung: **29.12.2021**
(21) Anmeldenummer: 19000444.0
(22) Anmeldetag: 02.10.2019
(51) Int. Cl.: H02K 17/16, H02K 17/20, H02K 3/32, H02K 15/00, H02K 3/30, H02K 3/34

(54) **KURZSCHLUSSLÄUFER**
SQUIRREL CAGE ROTOR
ROTOR À CAGE D'ÉCUREUIL

(30) Priorität: 23.10.2018 DE 102018008347
(43) Veröffentlichungstag der Anmeldung: 29.04.2020
(73) Patentinhaber: Wieland-Werke AG, 89079 Ulm (DE)
(72) Erfinder: Voggeser, Volker, D-89250 Senden (DE); Thumm, Gerhard, D-89155 Erbach (DE); Kästle, Christoph, D-89077 Ulm (DE); Wolf, Michael, D-89077 Ulm (DE); Lieble, Michael, 89269 Vöhringen (DE)

(56) Entgegenhaltungen:
- EP-A2- 2 782 222
- DE-A1- 10 247 484
- DE-A1-102005 030 797
- DE-A1-102014 013 684
- DE-B- 1 018 980
- JP-A- H 089 606

## Beschreibung

Die Erfindung betrifft einen Kurzschlussläufer gemäß dem Oberbegriff des Anspruchs 1.

Bei bekannten Kurzschlussläufern enthält ein mit geschlossenen Nuten versehenes Läuferblechpaket in den Nuten eingebettete Läuferstäbe aus elektrisch gut leitendem Material, deren Stabenden über die Stirnseiten des Läuferblechpakets vorstehen und mit kompakten Kurzschlussringen hart verlötet oder verschweißt sind. Zur Verhinderung des Aufblätterns des Läuferblechpakets und von störenden Schwingungen werden auf Bedarf stirnseitig gesonderte kompakte Druckringe an das Läuferblechpaket angepresst. Um ferner eine Axialverschiebung der Läuferstäbe in den Nuten des Läuferblechpakets zu verhindern, sind sie mit dem Läuferblechpaket mechanisch fest verbunden.

Aus der Druckschrift DE 34 21 537 A1 ist ein Kurzschlussläufer mit Käfigwicklung bekannt. Die Käfigwicklung umfasst elektrisch leitende Läuferstäbe, die in geschlossenen Nuten eines Läuferblechpakets angeordnet sind und über dessen Stirnseiten vorragen. Die überstehenden Enden sind mit gut leitenden Kurzschlussringen elektrisch verbunden. Die Kurzschlussringe sind, den Läuferblechen entsprechend, als genutete Blechpakete aus elektrisch gut leitendem Werkstoff ausgebildet und als stirnseitige Druckkörper an der ganzen Fläche wärmeübertragend eng am Läuferblechpaket anliegend in ihren geschlossenen Nuten mit den Läuferstäben fest verbunden. Eine Besonderheit ist, dass die elektrisch leitenden Einzelbleche für die Kurzschlussringe eine größere Dicke als die Läuferbleche aufweisen, im Übrigen jedoch die gleiche Form und Größe wie diese haben. Bei der Herstellung eines Kurzschlussläufers werden die Kurzschlussringe und die Läuferbleche gemeinsam paketiert, mit den stirnseitig eingeschobenen Läuferstäben bestückt und danach unter axialer Pressung des gesamten Pakets die Stabenden der Läuferstäbe mit den Kurzschlussringen hart verlötet.

Bei Käfigläufern von Asynchronmaschinen haben sich im Laufe der Zeit für verschiedenste Anwendungen unterschiedliche Formen der Käfigstäbe herausgebildet, die ausgewählte Eigenschaften aufweisen und für die jeweiligen Anwendungen dann besonders geeignet sind.

Weiterentwicklungen bezüglich der Anordnung der Läuferstäbe im Läuferblechpaket sind den Druckschriften EP 3 145 059 A1 und EP 3 168 969 A1 zu entnehmen. In beiden Druckschriften sind Käfigläufer von Asynchronmaschinen mit radial geschlossenen oder teilgeöffneten Nutaussparungen mit Leiterstäben beschrieben, die in den Nutaussparungen angeordnet sind und die durch einen metallischen Epoxidkleber oder alternativ mit einem Schaummaterial fixiert sind.

Es sind in Umfangsrichtung eines Blechs betrachtet, alle Aussparungen in ihrem Querschnitt gleich. Hierbei sind die in den Nutaussparungen axial einzusetzenden Leiterstäbe mit ausreichend radialem Spiel versehen. Sowohl die geometrischen Ausgestaltungen als auch die Abmessungen der Nutaussparung beeinflussen das magnetische Verhalten des Käfigläufers und damit letztendlich das angestrebte Betriebsverhalten der Asynchronmaschine.

Folglich werden in die Nutaussparungen der Bleche bzw. des Blechpakets die Leiterstäbe axial eingebracht, die keinen Presssitz mit der Nutaussparung aufweisen. Die Leiterstäbe können bereits mit einem Kurzschlussring verbunden sein und bilden dann einen Halbkäfig. Der nunmehr verbleibende Raum innerhalb der Nutaussparung zwischen Blechpaket und Stab aus Aluminium oder Kupfer kann mit Schaummaterial oder durch Epoxidharz aufgefüllt werden, welches auch mit ferromagnetischen Partikeln kleiner Korngröße versetzt sein kann. Hierbei ist der ohmsche Widerstand des Epoxidklebers höher als der von Elektroblech, was eine Isolation des Stabs in der Nut bedeutet und damit gegenüber der konventionellen Bauform mit eingegossenen Stäben geringere Stromverluste bedingt. Allgemein bekannt ist, dass im Läuferblechpaket in geschrägten Kurzschlussläufern Paketquerströme auftreten, die einen negativen Einfluss auf den Wirkungsgrad der Asynchronmaschine haben. Paketquerströme treten in signifikanter Weise bevorzugt in geschrägt aufgebauten Asynchronmaschine auf, deren Nutteilung des Stators ungleich der Rotornutteilung ist.

Die Druckschriften EP 2 782 222 A2 und DE 10 2014 013 684 A1 beschreiben Kurzschlussläufer für Asynchronmaschinen, mit Welle, Läuferblechpaket mit im Innern angeordneten Läuferstäben und Kurzschlussringen mit Ausnehmungen, durch welche die Stabenden der Läuferstäbe aus dem Läuferblechpaket hindurchtreten.

Weiterentwicklungen bezüglich der Ausbildung der Läuferstäbe im Läuferblechpaket sind den Druckschriften DE 10 18 980 B, DE 102 47 484 A1,

DE 10 2005 030 797 A1 zu entnehmen. In diesen Druckschriften sind Käfigläufer von Asynchronmaschinen mit isolierten Läuferstäben beschrieben.

Der Erfindung liegt die Aufgabe zugrunde, einen Käfigläufer hinsichtlich der Läuferstäbe weiterzubilden.

Die Erfindung wird bezüglich eines Kurzschlussläufers durch die Merkmale des Anspruchs 1 wiedergegeben. Die weiteren rückbezogenen Ansprüche betreffen vorteilhafte Aus- und Weiterbildungen der Erfindung.

Die Erfindung schließt einen Kurzschlussläufer ein, mit Welle, Läuferblechpaket mit im Innern angeordneten Läuferstäben und Kurzschlussringen mit Ausnehmungen, durch welche die Stabenden der Läuferstäbe aus dem Läuferblechpaket hindurchtreten. Die Läuferstäbe weisen an deren Oberfläche partiell eine elektrische Isolationsschicht auf, wobei die elektrische Isolationsschicht nur mit der Oberfläche der Läuferstäbe stoffschlüssig verbunden ist. Der Kurzschlussläufer ist insbesondere für eine Verwendung in einer Asynchronmaschine vorgesehen. Es kann sich insbesondere um einen schräg gestabten Kupferrotor mit Kurzschlussläuferkäfig handeln.

Die Erfindung geht dabei von der Überlegung aus, dass das Läuferblechpaket mit der Welle und den Kurzschlussringen nach dem Fügevorgang ein kompaktes Kurzschlussläuferbauteil ergibt. Im Läuferblechpaket und den Kurzschlussringen sind Läuferstäbe hindurchgeführt, die mit dem Material der Kurzschlussringe elektrisch leitend verbunden sind. Hierzu haben die Läuferstäbe in Bezug auf das Läuferblechpaket eine Überlänge, so dass diese Stabenden in Ausnehmungen in die Kurzschlussringe hineinragen. Die Kurzschlussringe werden an beiden Seiten des Läuferblechpakets auf der Welle positioniert.

Eine Reduzierung der elektrischen Leitfähigkeit zwischen benachbarten Läuferstäben im Blechpaket erfolgt mit dem Ziel, einen Stromfluss zwischen den Läuferstäben durch das Blechpaket zu unterbinden. Erreicht wird dies bei Isolierstoffen über einen vergleichsweise hohen spezifischen Widerstand. Des Weiteren haben Versuche gezeigt, dass neben den elektrischen und thermischen Kennwerten der Isolationsschichten auch deren Härte und Haftfestigkeit für die Eignung einen wesentlichen Einfluss hat. So ist bei partiell aufgebrachten Isolationsschichten zu beachten, dass diese bei allen Betriebsbedingungen einen direkten Kontakt der Läuferstäbe mit dem Läuferblechpaket wirksam verhindern.

Eine Möglichkeit, den Isolierstoff auf die Oberfläche des Bauteils aufzubringen, ist das Beschichten mittels des Tauchbeschichtungsverfahrens. Dieses kann in drei Phasen unterteilt werden. Begonnen wird mit dem Eintauchen des Probekörpers in die Beschichtung, die in einem wässrigen Zustand vorliegt. Dort verweilt der Körper so lange, bis seine Oberfläche vollständig mit der Lösung benetzt ist. Danach wird das Präparat mit konstanter Geschwindigkeit nach oben aus der Lösung herausgezogen. Hierbei läuft überschüssige Flüssigkeit von der Werkstückoberfläche ab und es bleibt ein dünner Film auf dem Werkstück bestehen. Für das Aufbringen eines Isolierstoffs auf die gesamte Oberfläche eines Läuferstabs ist dieses Verfahren bereits sehr gut geeignet.

Weiterhin geeignet für eine elektrische Isolationsschicht sind Faserisolierstoffe, welche nach dem Reinigen der Oberfläche lagig auf die selbige aufgebracht und stoffschlüssig mit der Oberfläche der Läuferstäbe verbunden werden. Um eine maximale Haftfestigkeit zu gewährleisten, muss darauf geachtet werden, Lufteinschlüsse zu vermeiden.

Vor dem Beschichten ist es vorteilhaft, das Werkstück zu reinigen. Hierbei werden Schmutzpartikel und sonstige Beläge von der Oberfläche entfernt, um ein gleichmäßiges und sauberes Verbinden der Isolationsschicht auf der Läuferstaboberfläche zu erzielen.

Der besondere Vorteil besteht darin, dass durch eine Isolation der Läuferstäbe insbesondere eines geschrägten Kurzschlussläufers der Wirkungsgrad einer Asynchronmaschine wesentlich gesteigert werden kann. Durch die Vermeidung von Paketquerströmen in gestabten und aus Kupfer aufgebauten Kurzschlussläufern für Asynchronmaschinen können zur weiteren Wirkungsgraderhöhung zudem Rotorwärmeverluste reduziert werden.

Im Rahmen von Untersuchungen wurden mit ausgewählten priorisierten Eigenschaften Isolierstoffe aufgefunden, die zur Verhinderung von Paketquerströmen in Läufern von Asynchronmaschinen eingesetzt werden können. Die in Betracht kommenden Isolierstoffe erfüllen zum einen die elektrischen Eigenschaften und halten zum anderen sowohl thermischen Einflüssen, beispielsweise durch Schweißen, als auch einer Verformung zur Herstellung tordierter Läuferstäbe in einer möglichen Serienfertigung stand. Einige der für die Vermeidung von Paketquerströmen bevorzugt in Betracht kommenden Isolierstoffe können Keramiken, Glimmer, Polyimid, Kunststoffmischverbindungen und Faserstoffgemische sein.

In bevorzugter Ausgestaltung der Erfindung kann zumindest ein Teil eines Kurzschlussrings aus einem Scheibenpaket bestehen, welches lagenweise aus Scheiben mit Ausnehmungen aufgebaut ist.

Jeder Kurzschlussring besteht selbst aus einem Scheibenpaket, das aus mehreren einzelnen Scheiben mit gleichem oder variierendem Durchmesser aufgebaut ist. Die Scheiben weisen auf der Scheibenfläche so viele Ausnehmungen auf, wie Läuferstäbe zum Aufbau eines Kurzschlussläufers benötigt werden. Diese zunächst lose zueinander angeordneten Einzelbauteile werden zu einem kompakten Kurzschlussläufer verbunden.

Zur Herstellung einer Fügeverbindung können benachbart angeordnete Scheiben einen kleinen Spalt als Nut aufweisen, entlang dem eine Fügeverbindung hergestellt werden kann. Eine Nut zwischen den Scheiben erstreckt sich um den Außenumfang eines Scheibenpakets und reicht radial ungefähr bis zu den Ausnehmungen für die Läuferstäbe. Auf diese Weise wird eine Nut gebildet, die radial bis in das Niveau der Läuferstäbe hineinreichen kann. Um die einzelnen Scheiben im Scheibenpaket mit dem Läuferstab zu verbinden, wird entlang dieser Nut eine Fügeverbindung hergestellt, die sowohl die Einzelteile mechanisch wie auch elektrisch miteinander verbindet. Zwischen den aneinander liegenden Scheibenflächen benachbarter Scheiben ist lediglich eine Fügeebene vorhanden. Alternativ können die aus dem Blechpaket austretenden Stäbe im Bereich der durch Fasen oder Stufen gebildeten Nut auch nicht freiliegen. Die Ausnehmungen in den Scheiben sind radial betrachtet folglich, radial einwärts betrachtet, etwas innerhalb der Nut der Scheiben positioniert, jedoch so, dass die Stäbe beim Schweißen dennoch im Bereich der Aufschmelzzone liegen. Die Stabbereiche in der Nähe einer Nut werden beim Fügen beispielsweise durch eine mittels Laserstrahl oder Elektronenstrahl erzeugte Schmelze umströmt und mit den Scheiben elektrisch leitend verbunden.

Auch bei unter höheren Temperaturen ablaufenden Fügeverfahren entsteht dabei nur eine lokale Erhitzung der zu fügenden Scheiben, ohne das übrige Bauteil und insbesondere das Läuferblechpaket thermisch in Mitleidenschaft zu ziehen. Die für Kurzschlussringe verwendeten Legierungen haben meist durch ihre gute elektrische Leitfähigkeit auch eine ausreichende thermische Leitfähigkeit, wodurch die beim Fügen eingebrachte thermische Energie schnell durch Wärmespreizung abgeführt wird.

In bevorzugter Ausgestaltung der Erfindung können die Stabenden mit dem Scheibenpaket eines Kurzschlussrings elektrisch leitend gefügt sein. Üblicherweise wird ein bloßes Zusammenfügen der Stabenden in Kurzschlussringen zu einer nicht ausreichenden elektrischen Verbindung führen. Die gewünschte elektrisch leitende Verbindung kann entweder dadurch bewerkstelligt werden, dass das Material der einzelnen Scheiben kurzzeitig lokal angeschmolzen wird und sich benachbarte Scheiben entlang dem Fügespalt mit dem Material der Stabenden verbinden. So wird eine besonders gute elektrische Verbindung zwischen den Läuferstäben und dem Kurzschlussring hergestellt. Bei einer vorteilhaften Ausführungsform der Erfindung können die Fügeverbindungen Schweißverbindungen oder Lötverbindungen sein. Hierbei wird das Laserstrahlschweißen oder Elektronenstrahlschweißen bevorzugt. Besonders für um den gesamten Umfang verlaufenden Fügeverbindungen sind derartige Schweiß- oder Lötverbindungen besonders geeignet. Die dabei entstehende Schweißraupe entsteht im Inneren der zwischen den Scheiben vorhandenen Nut und kann diese gegebenenfalls bis zur Scheibenstirnfläche vollständig ausfüllen.

Mit anderen Worten: In Radialrichtung erstreckt sich folglich eine frei zugängliche Öffnung zwischen benachbarten Scheiben bis auf das Niveau der Läuferstäbe, um die Einzelteile sowohl elektrisch wie auch mechanisch miteinander fügen zu können. Auf diese Weise wird ein ausreichender elektrischer Kontakt zur Stromleitung zum Betrieb einer Asynchronmaschine hergestellt. Die in jeder Scheibe eingebrachten Ausnehmungen sind in Form und Größe an die Läuferstäbe angepasst, so dass diese mit geringem Spiel positioniert werden können.

Vorteilhafterweise kann die Dicke der Isolationsschicht auf der Oberfläche eines Läuferstabs zwischen 0,05 bis 0,25 mm betragen. Diese Schichtdicke ist für die erforderliche Durchschlagfestigkeit für die bevorzugten Werkstoffe ausreichend. In vorteilhafter Ausgestaltung der Erfindung können die Oberflächenanteile der aus dem Läuferblechpaket tretenden Stabenden der Läuferstäbe keine elektrische Isolationsschicht aufweisen. Eine Isolation der anzuschweißenden Enden der Läuferstäbe ist nicht erforderlich, um eine ausreichende Stabilität des Rotors durch einen thermischen Fügeprozess zu erzielen. Insbesondere weisen die blanken Anschlussstellen zwischen Läuferstab und Kurzschlussring eine gute elektrische Leitfähigkeit auf.

Teil der erfinderischen Lösung ist, dass nur die radial außenliegenden und/oder die radial innenliegenden Flächenanteile eines Läuferstabs eine elektrische Isolationsschicht aufweisen.

Die partielle Isolation dient besonders der Kosteneinsparung von Isolationsmaterial, die Belegung muss allerdings ausreichend groß sein, dass im Betrieb einer Asynchronmaschine die Rotationskräfte nicht dazu führen, dass sich einzelne Abschnitte der Stabflächen an das Blechpaket anlegen. Vorteilhafterweise kann die elektrische Isolationsschicht aus einem 0,05 mm bis 0,15 mm, bevorzugt aus einem 0,06 mm dicken Klebeband bestehen. Eine Art von Faserisolierstoffen sind Klebebänder. Sie werden nach dem Reinigen der Oberfläche auf die selbige aufgelegt und mittels Andrücken an die Oberfläche aufgebracht. Um eine maximale Haftfestigkeit zu gewährleisten, muss auch bei diesem Prozess darauf geachtet werden, Lufteinschlüsse zu vermeiden. Das Aufkleben ist besonders für die von außen frei zugänglichen Flächen des Läuferstabs geeignet. Da üblicherweise die Paketquerströme durch eine maximale Spannung im einstelligen Voltbereich verursacht werden, ist die dünnste Banddicke mit 0,06 mm bereits ausreichend um die erforderliche Durchschlagsfestigkeit zu erzielen. Die maximale Dicke ist jedoch auch abhängig vom Fügespalt und der Möglichkeit, die isolierten Läuferstäbe im Blechpaket zu montieren.

Bei einer vorteilhaften Ausführungsform kann die elektrische Isolationsschicht aus einem Polyimid-Klebeband bestehen. Aus der Reihe der für die Vermeidung von Paketquerströmen recherchierten Isolierstoffe Keramiken, Glimmer, Polyimid, Kunststoffmischverbindungen und Faserstoffgemischen hat sich aus dem Bereich der Faserstoffgemische stammende Polyimid-Klebeband als besonders geeignet erwiesen. Dieses Klebeband ist insbesondere mit Polyimid versetzt, wodurch es sowohl für hohe Temperaturen, als auch für elektrische Isolierungen bis über 1000 V geeignet ist. Versuche haben gezeigt, dass Polyimid-Klebeband bei allen hierfür verwendeten Läuferstab-Blechpaket-Paarungen mit verschiedenen Abmessungen der Blechpaketnuten erfolgreich einsetzbar ist. Beachtenswert für eine mögliche Verwendung eines Isoliermaterials ist jedoch der Fügespalt, also der umlaufende Spalt zwischen Läuferstab und Blechpaketnut. Beim mit Polyimid-Klebeband beschichteten Läuferstab ist ein Fügespalt von ca. 0,1 - 0,2 mm zur Montage bereits ausreichend und vorteilhaft.

Eine Beschichtung, welche die elektrischen Anforderungen erfüllt wurde einem Schweißversuch unterzogen. Durch Schweißversuche soll der Wärmeeinfluss auf die Beschichtung beim Fügen beurteilt werden. Hierbei konnten Rückschlüsse gezogen werden, welchen Temperaturen eine weitere Beschichtung standhält und inwieweit das Polyimid-Band kurzzeitigen hohen Temperaturen ausgesetzt werden kann. Die Versuche brachten das Ergebnis, dass selbst die direkt unter der ersten Kurzschlussringscheibe angebrachte Polyimid-Folie beim Schweißen der ersten Nut des Kurzschlussringpakets unbeschädigt bleibt. Auch ein Ablösen der Beschichtung vom Stab ist nicht zu beobachten. Die Schweißung wird mit üblicherweise verwendeten Parametern für diese Art von Aufträgen durchgeführt, um eine für die Serienproduktion notwendige Repräsentanz des Ergebnisses zu erhalten. In einer weiteren Schweißprobe, bei der alle Scheiben des Scheibenpakets direkt nacheinander ohne Abkühlungsphase gefügt werden, wurde die Temperatur unmittelbar unter der ersten, bereits verschweißten Kurzschlussringscheibe aufgenommen. Diese liegt hierbei bei maximal 180°C. Ein Ablösen des Klebebands von der Substratoberfläche oder diverse weitere Modifikationen sind weder am zur Schweißnaht nächst gelegenen, noch an einem anderen angebrachten Klebebandstreifen zu finden.

Weiterhin bevorzugt können die Läuferstäbe um eine durch den Flächenschwerpunkt verlaufende Längsachse eine Torsion aufweisen. Verdrillversuche zeigen, dass beispielsweise das Polyimid-Klebeband im Falle einer maschinellen Produktion auch vor dem Tordieren des Stabs aufgebracht werden kann, ohne dass seine isolierenden Eigenschaften beeinträchtigt werden.

Ausführungsbeispiele der Erfindung werden anhand der schematischen Zeichnungen näher erläutert.

Darin zeigen:
- Fig. 1: schematisch eine Seitenansicht eines Kurzschlussläufers,
- Fig. 2: eine Ansicht eines Läuferstabs mit Aufbringvorrichtung,
- Fig. 3: eine Schrägansicht eines einbaufertigen Läuferstabs mit partiell aufgebrachter Isolationsschicht,

- Fig. 4: eine Schrägansicht eines Läuferstabs mit in Längsachse unterbrochener partieller Isolationsschicht, und
- Fig. 5: eine Frontalansicht eines tordierten Läuferstabs.

Einander entsprechende Teile sind in allen Figuren mit denselben Bezugszeichen versehen.

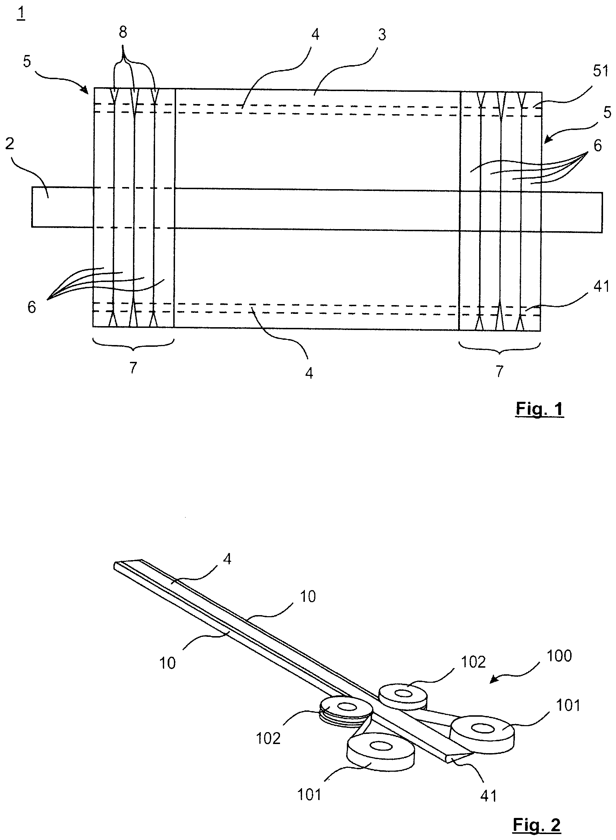

Fig. 1 zeigt schematisch eine Seitenansicht eines Kurzschlussläufers 1. In diesem Zustand ist das Läuferblechpaket 3 auf der Welle 2 positioniert, kombiniert mit zwei Kurzschlussringen 5 mit Ausnehmungen 51, die das Läuferblechpaket 3 stirnseitig abschließen. Im Inneren des Blechpakets 3 und der Kurzschlussringe 5 sind mehrere Läuferstäbe 4 angeordnet. Die Stabenden 41 der Läuferstäbe 4 ragen in Ausnehmungen 51 der Kurzschlussringe 5 hinein und schließen bündig mit der jeweils äußersten Scheibe 6 des Scheibenpakets 7 ab. Ein Scheibenpaket 7 besteht in diesem Fall aus vier Scheiben 6, die Fügespalte für eine stoffschlüssige Verbindung der Kurzschlussringe 5 aufweisen. Im Fügespalt ist eine Fügeverbindung 8, beispielsweise durch Schweißen oder Löten, realisiert.

Fig. 2 zeigt eine Ansicht eines Läuferstabs 4 mit Aufbringvorrichtung 100 für eine Isolationsschicht 10. In diesem Fall handelt es sich um eine automatische Aufbringvorrichtung 100 für einen auf Klebebandrollen 101 befindlichen Polyimid-Klebeband Vorrat. Das automatisierte Abrollen des Klebebands von den Klebebandrollen 101 erfolgt mit konstanter Vorschubgeschwindigkeit. Die durch den Vorschub des am Halbzeug haftenden Klebebands verursachte Zugkraft sorgt hierbei für ein selbstständiges Abziehen des Bands von seiner jeweiligen Klebebandrolle 101. Es wurde auch eine Möglichkeit gefunden, das Klebeband als Isolationsschicht 10 an die Form des Läuferstabs 4 anzupassen, ohne dass hierbei Lufteinschlüsse oder ähnliche, sich auf die Haftfestigkeit negativ auswirkende Fehler, auftreten.

Um das Klebeband ohne Fehler auf den Läuferstab zu führen, dienen an das Profil den Läuferstabs 4 angepasste gedrehte Andrückrollen 102. Hierzu wurden die Radien und Sonderformen eines Läuferstabs 4 als Negativprofil in Andrückrollen 102 aus Kunststoff eingebracht. Die Rollen sind dabei so gelagert, dass sie durch den Vorschub des Bands angetrieben werden. Durch das zuvor zugeführte Klebeband wird so die Beschichtung mit möglichst wenig Materialverbrauch aufgetragen. Zum Ankleben des Bands an den Stab können jedoch für die Serienfertigung auch pneumatische Greifer verwendet werden. Besonders für die geraden Seitenflächen des Läuferstabs eignet sich ein solcher Greifer bei ganzheitlicher Isolationsbeschichtung hervorragend.

Das Klebeband kann so ohne Blasenbildung längs eines Abschnitts des Läuferstabs aufgebracht werden. Es ist dabei vorteilhaft, die Beschichtung mit Klebeband bezüglich des Materialeinsatzes dadurch zu optimieren, dass nur die Radien des Läuferstabs beklebt werden. Der Durchgangswiderstand ist hierbei sowohl beim stehenden, als auch beim liegenden Rotor ausreichend hoch.

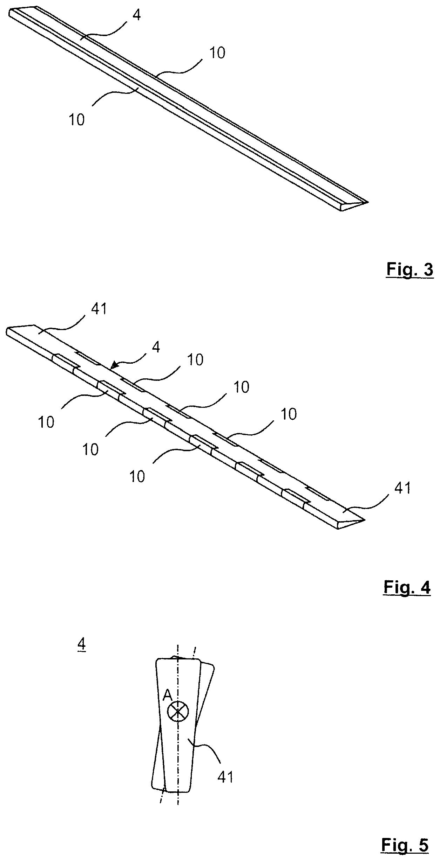

Fig. 3 zeigt eine Schrägansicht eines einbaufertigen Läuferstabs 4 mit partiell aufgebrachter Isolationsschicht 10 über die gesamte Länge. Diese Variante besteht darin, den gesamten Läuferstab 4 mit dem Klebeband nur an den gekrümmten Oberflächenbereichen zu beschichten.

Fig. 4 zeigt eine Schrägansicht eines Läuferstabs 4 mit in Längsachse unterbrochener partieller Isolationsschicht 10. Zur Teilbeschichtung des Läuferstabs wird nur abschnittsweise, abhängig von der zu beschichtenden Länge des Läuferstabs 4, das Klebeband als Isolationsschicht 10 aufgebracht. Die unbeschichteten Bereiche dienen insbesondere im Bereich der Stabenden 41 dem späteren Schweißvorgang und müssen nicht weiter behandelt werden.

Fig. 5 zeigt eine Frontalansicht eines tordierten Läuferstabs 4. Paketquerströme können insbesondere an geschrägt gefertigten Kurzschlussläufern auftreten. Diese Schrägung wird erzielt, indem das gesamte Blechpaket um seine Rotationsachse verdrillt wird. Aufgrund dieses Vorgangs verdrillen sich auch die Nuten des Blechpakets, was wiederum dazu führt, dass auch ein Läuferstab daran angepasst, also ebenfalls verdrillt sein muss. Die in Figur 5 dargestellte Ansicht eines für einen geschrägten Kurzschlussläufer vorgesehenen Läuferstabs 4 lässt die Torsion um die durch den Flächenschwerpunkt verlaufende Längsachse A deutlich erkennen. Gerade im Hinblick auf eine Serienproduktion ist die Kenntnis über das Verhalten der Beschichtung bei einer Verdrillung des Stabs von Bedeutung. Hieraus entscheidet sich, ob die Beschichtung vor dem Verdrillen aufgebracht werden kann oder ob dieser Vorgang danach erfolgen muss. Eine Polyimid-Klebeband-Beschichtung kann auch nach der Torsion des Läuferstabs von weit über 10°, wie sie bei der Fertigung verdrehter Rotoren oft üblich ist, ohne Fehler, Lufteinschlüsse oder Risse aufgebracht werden. Auch eine erneute Prüfung des Durchgangswiderstands zeigt, dass das Klebeband weiterhin seine Isoliereigenschaften erfüllt.

Bevorzugte Verfahrensabläufe, zu denen ein Beschichten des Läuferstabs vorteilhaft ist, sind:
1. nach dem Reinigen / vor dem Stanzen
2. nach dem Stanzen / vor dem Verdrillen
3. nach dem Verdrillen.

Der besonders bevorzugte Zeitpunkt, einen Beschichtungsprozess in die Fertigung zu integrieren, ist zwischen dem Reinigen und dem Stanzen auf die gewünschte Länge.

### Bezugszeichenliste

- 1: Kurzschlussläufer
- 2: Welle
- 3: Läuferblechpaket
- 4: Läuferstab
- 41: Stabende
- 5: Kurzschlussring
- 51: Ausnehmung
- 6: Scheibe
- 7: Scheibenpaket
- 8: Fügeverbindung

- 10: Isolationsschicht

- 100: Aufbringvorrichtung
- 101: Klebebandrolle
- 102: Andrückrolle

- A: Längsachse

## Patentansprüche

1. Kurzschlussläufer (1) für eine Asynchronmaschine, mit Welle (2), Läuferblechpaket (3) mit im Innern angeordneten Läuferstäben (4) und Kurzschlussringen (5) mit Ausnehmungen (51), durch welche die Stabenden (41) der Läuferstäbe (4) aus dem Läuferblechpaket (3) hindurchtreten,
**dadurch gekennzeichnet,**
- **dass** die Läuferstäbe (4) an deren Oberfläche partiell eine elektrische Isolationsschicht (10) aufweisen,
- **dass** die elektrische Isolationsschicht (10) nur mit der Oberfläche der Läuferstäbe (4) stoffschlüssig verbunden ist, und
- **dass** nur die radial außenliegenden und/oder die radial innenliegenden Flächenanteile eines Läuferstabs (4) eine elektrische Isolationsschicht (10) aufweisen, wobei die Isolationsschicht (10) bei allen Betriebsbedingungen einen direkten Kontakt der Läuferstäbe (4) mit dem Läuferblechpaket (3) wirksam verhindert.

2. Kurzschlussläufer (1) nach Anspruch 1, **dadurch gekennzeichnet, dass** zumindest ein Teil eines Kurzschlussrings (5) aus einem Scheibenpaket (7) besteht, welches lagenweise aus Scheiben (6) mit Ausnehmungen (51) aufgebaut ist.

3. Kurzschlussläufer (1) nach Anspruch 2, **dadurch gekennzeichnet, dass** die Stabenden (41) mit dem Scheibenpaket (7) eines Kurzschlussrings (5) elektrisch leitend gefügt sind.

4. Kurzschlussläufer (1) nach einem der Ansprüche 1 bis 3, **dadurch gekennzeichnet, dass** die Dicke der Isolationsschicht (10) auf der Oberfläche eines Läuferstabs (4) zwischen 0,05 bis 0,25 mm beträgt.

5. Kurzschlussläufer (1) nach einem der Ansprüche 1 bis 4, **dadurch gekennzeichnet, dass** die Oberflächenanteile der aus dem Läuferblechpaket (3) tretenden Stabenden (41) der Läuferstäbe (4) keine elektrische Isolationsschicht (10) aufweisen.

6. Kurzschlussläufer (1) nach einem der Ansprüche 1 bis 5, **dadurch gekennzeichnet, dass** die elektrische Isolationsschicht (10) aus einem 0,05 bis 0,15 mm dicken Klebeband besteht.

7. Kurzschlussläufer (1) nach einem der Ansprüche 1 bis 6, **dadurch gekennzeichnet, dass** die elektrische Isolationsschicht (10) aus einem Polyimid-Klebeband besteht.

8. Kurzschlussläufer (1) nach einem der Ansprüche 1 bis 7, **dadurch gekennzeichnet, dass** die Läuferstäbe (4) um eine durch den Flächenschwerpunkt verlaufende Längsachse (A) eine Torsion aufweisen.

## Claims

1. Squirrel cage rotor (1) for an asynchronous machine, having a shaft (2), a rotor plate packet (3) having rotor bars (4) which are arranged inside and short-circuit rings (5) having recesses (51) through which the rod ends (41) of the rotor bars (4) extend from the rotor plate packet (3), **characterised in that**
- the rotor bars (4) partially have an electrical insulation layer (10) on the surface thereof,
- **in that** the electrical insulation layer (10) is connected in a materially engaging manner only to the surface of the rotor bars (4), and
- **in that** only the radially outer and/or radially inner surface portions of a rotor rod (4) have an electrical insulation layer (10), wherein the insulation layer (10) under all operating conditions effectively prevents direct contact of the rotor rods (4) with the rotor plate packet (3).

2. Squirrel cage rotor (1) according to claim 1, **characterised in that** at least a portion of a short-circuit ring (5) comprises a disc packet (7) which is constructed in layers from discs (6) with recesses (51).

3. Squirrel cage rotor (1) according to claim 2, **characterised in that** the rod ends (41) are joined in an electrically conductive manner to the disc packet (7) of a short-circuit ring (5).

4. Squirrel cage rotor (1) according to any one of claims 1 to 3, **characterised in that** the thickness of the insulation layer (10) on the surface of a rotor rod (4) is from 0.05 to 0.25 mm.

5. Squirrel cage rotor (1) according to any one of claims 1 to 4, **characterised in that** the surface portions of the rod ends (41) which extend from the rotor sheet packet (3) have no electrical insulation layer (10).

6. Squirrel cage rotor (1) according to any one of claims 1 to 5, **characterised in that** the electrical insulation layer (10) comprises an adhesive tape which is from 0.05 to 0.15 mm thick.

7. Squirrel cage rotor (1) according to any one of claims 1 to 6, **characterised in that** the electrical insulation layer (10) comprises a polyimide adhesive tape.

8. Squirrel cage rotor (1) according to any one of claims 1 to 7, **characterised in that** the rotor bars (4) have a torsion about a longitudinal axis (A) which extends through the centroid of an area.

## Revendications

1. Rotor à cage d'écureuil (1) pour une machine asynchrone, avec un arbre (2), un empilement de tôles de rotor (3) avec des barres de rotor (4) disposées à l'intérieur et des bagues de court-circuit (5) avec des évidements (51) à travers lesquels les extrémités de barre (41) des barres de rotor (4) passent depuis l'empilement de tôles de rotor (3),
**caractérisé**
- **en ce que** les barres de rotor (4) présentent partiellement une couche d'isolation électrique (10) sur leur surface,
- **en ce que** la couche d'isolation électrique (10) n'est reliée matériellement qu'avec la surface des barres de rotor (4), et
- **en ce que** seules les portions de surface radialement extérieures et/ou radialement intérieures d'une barre de rotor (4) présentent une couche d'isolation électrique (10), où la couche d'isolation (10) empêche efficacement un contact direct des barres de rotor (4) avec l'empilement de tôles de rotor (3) dans toutes les conditions de fonctionnement.

2. Rotor à cage d'écureuil (1) selon la revendication 1, **caractérisé en ce qu'**au moins une partie d'une bague de court-circuit (5) consiste en un empilement de disques (7) qui est construit en couches à partir de disques (6) avec des évidements (51).

3. Rotor à cage d'écureuil (1) selon la revendication 2, **caractérisé en ce que** les extrémités de barre (41) sont jointes à l'empilement de disques (7) d'une bague de court-circuit (5) de manière électriquement conductrice.

4. Rotor à cage d'écureuil (1) selon l'une des revendications 1 à 3, **caractérisé en ce que** l'épaisseur de la couche d'isolation (10) sur la surface d'une barre de rotor (4) est entre 0,05 et 0,25 mm.

5. Rotor à cage d'écureuil (1) selon l'une des revendications 1 à 4, **caractérisé en ce que** les portions de surface des extrémités de barre (41) des barres de rotor (4) sortant de l'empilement de tôles de rotor (3) ne présentent pas de couche d'isolation électrique (10).

6. Rotor à cage d'écureuil (1) selon l'une des revendications 1 à 5, **caractérisé en ce que** la couche d'isolation électrique (10) consiste en un ruban adhésif épais de 0,05 à 0,15 mm.

7. Rotor à cage d'écureuil (1) selon l'une des revendications 1 à 6, **caractérisé en ce que** la couche d'isolation électrique (10) consiste en un ruban adhésif polyimide.

8. Rotor à cage d'écureuil (1) selon l'une des revendications 1 à 7, **caractérisé en ce que** les barres de rotor (4) présentent une torsion autour d'un axe longitudinal (A) passant par le centre de gravité.
